# EUROPÄISCHE PATENTANMELDUNG

(11) **EP 1 890 069 A2**
(43) Veröffentlichungstag der Anmeldung: **20.02.2008**
(21) Anmeldenummer: 07014136.1
(22) Anmeldetag: 19.07.2007
(51) Int. Cl.: F16L 37/14

(54) **Steckverbindung**

(30) Priorität: 17.08.2006 DE 102006038566
(71) Anmelder: LuK Lamellen und Kupplungsbau Beteiligungs KG, 77815 Bühl (DE)
(72) Erfinder: Frison, Dominique, 67160 Seebach (FR); Chevet, Alexandre, 45590 Saint Cyr en Val (FR); Szamos, Boglarka, 2837 Vertesszölös (HU); Leger, Frédéric, 28140 Terminiers (FR)

(57) **Zusammenfassung**

Die Erfindung betrifft eine Steckverbindung für Leitungssysteme, insbesondere Leitungen für Kupplungsausrück- und Bremssysteme in Fahrzeugen, bestehend aus einem Steckteil (2), einem Hülsenteil (1), einem Sicherungselement (8) und mindestens einem Dichtelement (4). Um den Arbeits und Kraftaufwand bei einer axial zu sichernden Steckverbindung in schwer zugänglichen Räumen eines Fahrzeuges zu reduzieren, wird das zur Aufnahme mindestens einer Axialkraft dienende Sicherungselement (8) an einem als Hülsenteil (1) ausgebildeten Endbereich einer Leitung oder eines Bauteils axial und radial lagefixierbar ausgebildet.

## Beschreibung

Die Erfindung betrifft eine Steckverbindung für Leitungen, insbesondere Leitungen für Kupplungsausrück- und Bremssysteme in Fahrzeugen nach dem Oberbegriff des Patentanspruches 1, sowie ein Verfahren zum Zusammensetzen einer Steckverbindung gemäß den Oberbegriffen der Ansprüche 36 bis 38.

Steckverbindungen für Leitungen dienen dazu, eine Verbindung zwischen zwei von einem Medium durchströmbaren Hohlkörpern herzustellen. Sie bestehen im Wesentlichen aus einem Steckteil und einem Hülsenteil, wobei zum Herstellen der Verbindung das Steckteil in das Hülsenteil eingeführt wird. Zur Sicherstellung einer dichtenden Verbindung zwischen Steck-und Hülsenteil weisen Steckverbindungen Dichtelemente auf. Diese sind vorzugsweise ringförmig ausgebildet und werden entweder über das Steckteil geschoben, bevor das Steckteil in das Hülsenteil eingeführt wird, oder in das Hülsenteil eingebracht, bevor das Steckteil in das Hülsenteil eingeschoben wird.

Bei Kupplungsausrücksystemen werden die eine Ausrückkraft übertragenden Leitungen mit einem entsprechenden Druck beaufschlagt. Zur Sicherstellung einer gleich bleibenden Funktion in der hydraulischen Strecke ist der Geberzylinder mit einem Flüssigkeitsreservoir verbunden. Diese Leitung dient lediglich zum Ausgleich von Flüssigkeitsverlusten, bzw. zum Luftaustritt. Aus diesem Grunde ist diese Leitung drucklos. Zur Verbindung dieser Leitung mit dem Flüssigkeitsreservoir und dem Anschlussstutzen des Geberzylinders bedarf es daher keiner aufwändigen und hohen Drücken standhaltenden Verbindung.

In der DE 103 21 287 A1 wird eine hydraulische Verbindung in Form einer Steckverbindung vorgeschlagen. Bei dieser wird die Steckverbindung mit einem Stecker sowie einer Steckbuchse realisiert, bei der der Stecker mit einem Widerlager und einem Dichtelement versehen ist. Diese aus unterschiedlichen Materialien bestehenden Bauteile werden nach dem Fügevorgang stoffschlüssig miteinander verbunden. Zur Aufnahme der Axialkraft dient hierbei eine Klemmfeder, die vor dem Fügevorgang in die Steckbuchse eingeführt ist und beim Fügevorgang des Steckers in die Buchse in eine im Stecker vorgesehene umlaufende Nut einschnappt. Dabei wird der Stecker sowohl form- als auch kraftschlüssig mit der Buchse verbunden. Die Dichtheit dieser Verbindung wird durch eine zusätzlich am Stecker angebrachte Dichtung realisiert.

Aus der DE 10 2004 044 917 A1 ist eine lösbare Steckverbindung für Rohrleitungen bekannt, die zur Verbindung zweier Leitungsenden einen Adapter verwendet, der ein in radialer Richtung wirkendes federelastisches Sicherungselement aufweist. Dieses Sicherungselement dient zur Aufnahme der axialen Kräfte und wird in den Adapter eingesteckt. Nach dem Einsteckvorgang verrastet dieses Sicherungselement mit dem Einsteckteil.

Bei diesen Lösungen wird jeweils in das Hülsenteil ein zusätzliches Teil als Sicherungselement in radialer Richtung eingefügt. Dazu ist das Hülsenteil mit einer entsprechenden Aussparung oder Nut versehen. Das Sicherungselement ist außerdem im unmontierten Zustand von Hülsen- und Steckteil nicht verliersicher angebracht.

Die Aufgabe der vorliegenden Erfindung besteht deshalb darin, den Arbeits- und Kraftaufwand bei einer axial zu sichernden Steckverbindung in schwer zugänglichen Räumen eines Fahrzeuges zu reduzieren.

Diese Aufgabe wird mit einer Steckverbindung mit den Merkmalen des Anspruchs 1 gelöst.

Diese Steckverbindung weist ein Steckteil, ein Hülsenteil, ein Sicherungselement und mindestens ein Dichtelement auf. Sowohl das Steckteil als auch das Hülsenteil können entsprechend ausgebildete Endabschnitte von Leitungen oder Bauteilen sein. Dabei ist das zur Aufnahme mindestens einer Axialkraft dienende Sicherungselement auf dem als Hülsenteil ausgebildeten Endbereich eines Leitungsendes oder Bauteils axial und radial lagefixierbar. Durch diese Maßnahme ist es möglich, dass auf das mit einem Hülsenteil zur Verbindung mit einem Anschlussteil versehene Ende einer Leitung bereits das Sicherungselement außerhalb des Fahrzeugraumes vormontiert werden kann. Bei der Montage mit einem als Steckteil ausgebildeten Bauteilanschluss in einem beispielsweise schwer zugänglichen Fahrzeugraum muss dieses nur noch in das Hülsenteil eingesteckt werden und die Steckverbindung ist axial gegen Aufziehen gesichert.

Dabei kann das Hülsenteil je nach Anwendungsfall unterschiedlich ausgebildet sein. So weist das Hülsenteil an mindestens einem Ende nur eine axiale Verlängerung auf, wenn dieses für eine Verbindung mit einer drucklosen Leitung oder mit einem Anschlussstück eines Bauteils, wie beispielsweise eines Geberzylinders oder eines Flüssigkeitsreservoirs vorgesehen ist. Soll dagegen ein mit einem Bauteil versehenes Hülsenteil mit einer Druckleitung verbunden werden, dann schließt sich in Verlängerung an diese axiale Verlängerung mindestens ein Schnappelement an, wodurch das Hülsenteil eine weitere axiale Verlängerung erfährt.

In vorteilhafter Weise sind an dieser axialen Verlängerung mehrere Schnappelemente beispielsweise angespritzt, die zueinander beabstandet auf einer Kreisbahn angeordnet und deren Enden hakenartig ausgebildet sind, wobei diese Haken in Achsrichtung zeigen.

Zur Aufnahme eines Dichtelements ist in den Innendurchmesser der axialen Verlängerung eine zylindrische Erweiterung eingebracht. Dabei richtet sich die Tiefe dieser zylindrischen Erweiterung mindestens nach der möglichen axialen Ausdehnung des verwendeten Dichtelements. Bei der Tiefe ist ebenfalls noch zu berücksichtigen, dass sich das auf diese Verlängerung aufzubringende Sicherungselement an dieser abstützen kann.

In einer weiteren vorteilhaften Ausgestaltung der Erfindung ist am Umfang der axialen Verlängerung mindestens eine Griffrille vorgesehen.

Weiterhin ist es vorteilhaft, dass sich das Ende des Steckteils, beispielsweise eines Bauteilanschlusses, aus einem Endbereich und einem Anschlussbereich zusammensetzt und am Übergang von einem zum anderen Bereich ein Absatz bzw. Hinterschnitt gebildet wird.

Bei einer zu realisierenden drucklosen Steckverbindung ist das Sicherungselement ringförmig ausgebildet, und beansprucht damit wenig Bauraum. Allerdings hat es die Funktion zu erfüllen, axiale Kräfte aufzunehmen, wozu am Umfang des ringförmigen Grundkörpers mindestens eine, vorteilhaft sind jedoch drei Laschen, die beispielsweise angespritzt und unter einem Winkel von 120° zueinander beabstandet sind, die jeweils einen Bund aufweisen, die durch ihre jeweils hakenartig ausgebildeten Enden als Rastelemente definiert sind.

Da das Sicherungselement eine bestimmte Elastizität aufweisen sollte, wird dieses in vorteilhafter Weise aus einem elastischen Material hergestellt. Aus Kostengründen wird deshalb Kunststoff verwendet, der ein Gießen oder Spritzgießen ermöglicht. Um nach dem Gießprozess alle Kerne an dem gegossenen Bauteil entfernen zu können, ist in jeder Lasche eine Aussparung vorgesehen.

Weiterhin ergibt sich in vorteilhafter Weise, dass im eingebauten Zustand das Dichtelement einen Anschlag zwischen dem Hülsenteil und dem Sicherungselement erfährt.

Zur Realisierung einer Steckverbindung eines Hülsenteils mit einer Druckleitung ist auch das Sicherungselement konstruktiv anders als bei einer drucklosen Leitung ausgeführt. So besteht es in diesem Falle im Wesentlichen aus einem hülsenförmigen Grundkörper, in dessen Innerem in mindestens einem Endbereich eine Ringnut eingebracht ist. Da auch in diesem Falle aus Kostengründen das Sicherungselement aus Kunststoff hergestellt ist, wird diese Ringnut beim Gießvorgang mit eingegossen. Der dadurch entstehende Bund ist wiederum endseitig hakenartig ausgeformt, so dass er als Rastelement definiert werden kann. Die hakenartige Form zeigt dabei wieder in Achsrichtung.

Das Steckteil, das in diesem Beispiel durch die Druckleitung gebildet wird, weist in seinem Endbereich zwei Stauchungen auf, die voneinander beabstandet sind. Dabei ist es für die Herstellung einer in axialer und radialer Richtung sicheren Verbindung wichtig, dass die Abstände beider Stauchungen in einem bestimmten Bezug zu den Abständen der Rast- bzw. Schnappmechanismen haben, wobei unter diesen der jeweilige Eingriff des Rast- bzw. Schnappelements entweder in die Griffrille oder hinter die Stirnfläche der zweiten Stauchung gemeint ist.

Diese erfindungsgemäße Steckverbindung kann auch zur Verbindung zweier Leitungen verwendet werden, bei denen nicht erkennbar ist, welches Ende als Steck- bzw. Hülsenteil fungiert. Bei dieser Verbindung kann es sich in vorteilhafter Weise um eine Verbindung einer Druckleitung aus Stahl mit einer flexiblen Leitung oder Schlauch, beispielsweise aus Kunststoff handeln. In diesem Falle wird mittels eines auf eine Leitung aufgebrachten Adapters ein Hülsenteil definiert. Da dieser Adapter aus Kostengründen aus Kunststoff besteht, wird dieser in vorteilhafter Weise auf den Endbereich des Kunststoffschlauchs aufgebracht und dort mittels Reibschweißen mit diesem verschweißt. Dabei ist der Adapter so ausgeführt, dass er ebenfalls mit mehreren am Umfang verteilten, wie zuvor beschriebenen Schnappelementen versehen ist, die die Verlängerung seines hülsenförmigen Grundkörpers bilden und über das Ende des Kunststoffschlauchs hinausragen. Somit ist es möglich, dass diese Schnappelemente mit ihren hakenartigen Enden hinter einer an der Druckleitung vorgesehenen Stauchung einschnappen. Das Sicherungselement, das in diesem Beispiel in vorteilhafter Weise auf dem Kunststoffschlauch aufgesetzt ist, wird danach so weit in Richtung Verbindungsstelle verschoben, dass es mindestens den Bereich der Schnappelemente umhüllt und damit die Verbindungsstelle vor einer unbeabsichtigten Öffnung sichert.

Weiterhin wird die Aufgabe der Erfindung durch ein Verfahren zur Herstellung einer Steckverbindung gemäß den Merkmalen des Anspruchs 36 gelöst. Somit wird zunächst das Dichtelement in die zylindrische Erweiterung des Hülsenteils eingelegt. Danach wird das Sicherungselement auf die axiale Verlängerung des Hülsenteils soweit aufgesetzt, bis die Rastelemente in die Griffrille einrasten. Abschließend wird das Steckteil, hier der Bauteilanschluss, nur noch soweit in das Hülsenteil eingesteckt, bis dieses an der inneren ringförmigen Stirnfläche des Hülsenteils anschlägt. Dabei rastet gleichzeitig das Dichtelement, hier als O-Ring ausgebildet, in den Hinterschnitt des Steckteils ein.

Die Aufgabe der Erfindung wird ebenfalls gelöst durch ein Verfahren zur Herstellung einer Steckverbindung nach den Merkmalen des Anspruchs 37. Danach wird wiederum zunächst der als Dichtelement verwendete O-Ring in die zylindrische Erweiterung des Hülsenteils eingelegt. Daran anschließend oder auch vor dem Einlegen des O-Rings wird das Sicherungselement auf die als Steckteil ausgebildete Druckleitung aufgesetzt. Diese Vormontage beider Endbereiche der zu verbindenden Teile kann dabei außerhalb des Fahrzeuges, wie z. B. beim Kunden oder in der Werkstatt erfolgen. Erst im Fahrzeugraum wird die Endmontage beider Endbereiche ausgeführt. Dazu ist lediglich erforderlich, dass ohne großen Kraftaufwand die Druckleitung in das Hülsenteil soweit eingedrückt wird, bis die Stirnfläche der ersten Stauchung am O-Ring anschlägt. Danach schnappt zunächst das Hülsenteil auf die Druckleitung auf. Anschließend schnappen die Schnappelemente hinter die Stirnfläche der zweiten Stauchung ein. Abschließend rastet das mindestens eine Rastelement des Sicherungselements in die Griffrille des Hülsenteils ein.

Mit dem Verfahren nach Anspruch 38 wird die Aufgabe zur Herstellung einer Steckverbindung ebenfalls gelöst, indem zunächst das Sicherungselement auf das Hülsenteil soweit aufgeschoben ist, bis es durch einen Anschlag seine Ausgangsstellung erreicht hat. Dieser Anschlag ist so ausgeführt, dass das Sicherungselement zusätzlich lagefixiert ist. Danach wird das Steckteil, das in diesem Falle als Ende einer Druckleitung ist, in das Hülsenteil, das mittels eines auf den Endbereich einer Leitung aufgesetzten Adapters, der überstehende Schnappelemente aufweist, eingedrückt, bis dieses an einem in dessen Innern vorgesehenen Hindernis anschlägt. Dabei schnappen die Schnappelemente des Adapters bzw. Hülsenteils hinter die Stirnfläche einer auf der Druckleitung vorgesehenen Stauchung ein. Damit ist zunächst der Fügevorgang abgeschlossen. Zur Sicherung der Verbindungsstelle wird nachfolgend das Sicherungselement auf dem Hülsenteil soweit in Richtung Schnappelemente verschoben, bis es seine vorgesehene Endstellung auf dem Hülsenteil erreicht hat. Die axiale Verlagerung bzw. Verschiebung des Sicherungselements wird dabei in vorteilhafter Weise durch eine Überlagerung seiner Längsbewegung durch eine Drehbewegung erreicht. Auf diese Weise ist es möglich, das Sicherungselement aus seiner lagefixierten Ausgangsstellung in seine Endstellung zu bringen, wobei es in dieser Stellung ebenfalls durch eine Drehbewegung lagefixierbar ist.

Weitere Vorteile und vorteilhafte Weiterbildungen der Erfindung sind Gegenstand der nachfolgenden Figuren sowie deren Beschreibungsteile.

Es zeigen:

| | |
|---|---|
| Figur 1 | eine Schnittdarstellung einer Steckverbindung mit einem konisch auslaufenden Endbereich einer Leitung als Steckteil, |
| Figur 2 | eine Schnittdarstellung einer Steckverbindung mit einem gerade auslaufenden Endbereich einer Leitung als Steckteil, |
| Figur 3a | die Vorderansicht eines erfindungsgemäßen Sicherungselements, |
| Figur 3b | eine räumliche Darstellung eines erfindungsgemäßen Sicherungselements, |
| Figur 4 | eine Schnittdarstellung zweier mittels einer Steckverbindung miteinander verbundener Leitungsenden, |
| Figur 5 | mittels einer Steckverbindung zu verbindender Leitungsenden gemäß Figur 4 in einer Schnittdarstellung, |
| Figur 6 | eine Schnittdarstellung einer weiteren Ausführungsvariante einer zu realisierenden Verbindung, bei der eine Stahlleitung mit einem Anschlussbauteil über eine Steckverbindung verbunden werden soll. |

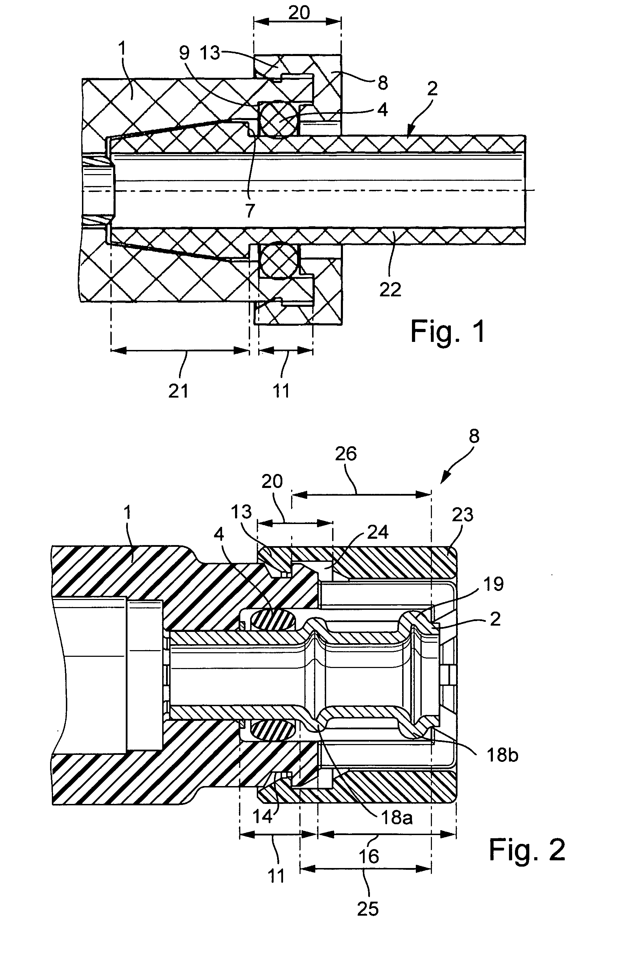

Die Figur 1 zeigt eine Steckverbindung im Schnitt, die aus einem Hülsenteil 1, einem Steckteil 2, einem Dichtelement 4 und einem Sicherungselement 8 gebildet wird. In diesem Beispiel handelt es sich um eine Verbindung einer drucklosen Nachlaufleitung, deren Endbereich mit einem Hülsenteil 1 versehen ist, mit einem als Steckteil 2 definierten Bauteilanschluss, wie beispielsweise einem Anschluss eines Flüssigkeitsreservoirs. In vorteilhafter Weise entspricht die Innenkontur des Hülsenteils 1 in Größe und Form der mit diesem zu fügenden der äußeren Form des Endbereichs des Steckteils 2. Weiterhin ist mindestens an einem Ende der Innendurchmesser das Hülsenteils 1 zur Aufnahme eines entsprechenden Dichtelements 4 mittels einer zylindrischen Erweiterung 9 vergrößert. Die Tiefe dieser zylindrischen Erweiterung 9 ist dabei so zu wählen, dass sie einerseits der Breite des Dichtelements 4 entspricht und andererseits auch dessen Ausdehnung beim Fügen berücksichtigt. Auf Grund dieser Materialschwächung im Endbereich des Hülsenteils 1 entsteht eine axiale Verlängerung seines Grundkörpers, die gleichzeitig dazu dient, eine höhere Elastizität zu erzielen, als der Grundkörper aufweist. Am Umfang dieser axialen Verlängerung 11 des Hülsenteils 1 ist eine Griffrille 14 in Form eines Einschnittes vorgesehen.

Das Steckteil 2, das in diesem Beispiel durch ein Rohr- oder Schlauchende gebildet wird, ist in seinem Endbereich konisch ausgebildet, so dass zu dem sich anschließenden Rohr- oder Schlauchdurchmesser ein Absatz entsteht. Somit ergibt sich aus den beiden unterschiedlichen Durchmessern ein Hinterschnitt 7, der auch als Anschlag für das Dichtelement 4 fungieren könnte. In diesem Beispiel wird allerdings diese konstruktive Ausbildung nicht als Anschlag genutzt.

Zur axialen Sicherung dieser Verbindung von Steckteil 2 und Hülsenteil 1 dient das Sicherungselement 8. Dieses ist ebenfalls hülsenartig ausgebildet, wobei dessen Innendurchmesser dem größten Außendurchmesser des Steckteils 2 angepasst ist. Um einerseits eine bestimmte Funktion realisieren zu können und andererseits das Sicherungselement 8 nicht unnötig groß und schwer auszubilden, sind am Umfang des Grundkörpers 15 des Sicherungselements 8 mehrere als Laschen 12 ausgebildete radiale Erweiterungen angebracht. In diesem Beispiel sind es drei Laschen 12, die jeweils um einen Winkel von 120° voneinander beabstandet sind. An diesen Laschen 12 sind stirnseitig in axialer Richtung verlaufende Rastelemente 13 angespritzt, die an ihrem Ende hakenartig ausgebildet sind. Zum Ausformen dieser Rastelemente 13 verbleiben aus fertigungstechnischen Gründen in den Laschen 12 Aussparungen 10. Dieses an jeweils einer Lasche 12 angeordnete Rastelement 13 könnte allerdings ebenso gut durch mehrere Rastelemente 13 gebildet werden. Die Länge des Rastelements 13 richtet sich dabei nach der Position der Griffrille 14 des Hülsenteils 1.

Zur Erzielung dieser Steckverbindung wird zunächst das Dichtelement 4 in die zylindrische Erweiterung 9 des Steckteils 2 soweit eingesetzt, bis dieses am Absatz, der sich aus der Differenz zwischen dem Durchmesser der zylindrischen Erweiterung 9 und dem Innendurchmesser ergibt, zum Anschlag kommt. Danach wird das Sicherungselement 8 seitlich auf das Ende des Steckteils 2 aufgesteckt, bis es mit den hakenartig ausgebildeten Enden seiner Rastelemente 13 in die Griffrille 14 des Hülsenteils 1 eingreift. Auf diese Weise wird das Sicherungselement 8 verliersicher auf dem Hülsenteil 1 fixiert. Gleichzeitig wird bei diesem Vorgang das Dichtelement 4, das in diesem Beispiel von einem O-Ring gebildet wird, ebenfalls lagefixiert. Das so vorbereitete Ende eines Rohres oder einer Schlauchleitung kann dann in einem nachfolgenden Fügevorgang, beispielsweise bei einem Kunden, mit einem Steckteil 2 komplettiert werden, indem dieses nur noch in diese vormontierte Baueinheit ohne großen Kraftaufwand eingesteckt wird. Dabei wird zunächst das konisch ausgebildete Ende des Steckteils 2 in den Innendurchmesser des Sicherungselements 8 eingeschoben; beim Weiterschieben in axialer Richtung wird der O-Ring 4 radial nach außen, d. h. an den Innendurchmesser der zylindrischen Erweiterung 9 gedrückt, bis schließlich die Stirnfläche des Steckteils 2 auf die ringförmige Anschlagfläche zum Leitungsdurchmesser auftrifft und der O-Ring 4 hinter den Hinterschnitt am konischen Ende des Steckteils 2 einschnappt.

Die Figur 2 zeigt eine weitere Verwendung für das Sicherungselement 8. In diesem Falle dient es zur axialen Sicherung einer Verbindung eines Hülsenteils 1, das beispielsweise über das Ende einer Rohr- oder Schlauchleitung aufgebracht ist, mit einer Druckleitung. Aus diesem Grunde weist das Hülsenteil 1 eine gegenüber Figur 1 veränderte konstruktive Ausbildung auf. Allerdings ist ebenso wie in Figur 1 die Innenkontur des Hülsenteils 1 der Außenkontur des Steckteils 2, in diesem Falle der Druckleitung, angepasst. Zur Aufnahme eines Dichtelements 4 ist das Hülsenteil 1 ebenfalls mit einer zylindrischen Erweiterung 9 versehen, so dass sich wiederum eine axiale Verlängerung 11 ergibt. Im Gegensatz zu Figur 1 sind an diese noch Schnappelemente 16 angespritzt, die segmentartig an der Stirnfläche der axialen Verlängerung 11 angespritzt sind und somit eine weitere axiale Verlängerung 17 aufweisen. Diese Schnappelemente 16 sind so an der Stirnfläche angeordnet, dass sie mit ihren Außenflächen einen Kreis beschreiben. Das freie Ende dieser Schnappelemente 16 ist hakenförmig ausgebildet, wobei die Kantenlinien der Haken ebenfalls einen Kreisbogen beschreiben. Wie in Figur 1 ist das Hülsenteil 1 am Umfang mit einer umlaufenden Griffrille 14 versehen.

Das Sicherungselement 8 ist in diesem Falle hülsenartig gestaltet und gegenüber Figur 1 länger ausgeführt. Der Innendurchmesser des Sicherungselements 8 ist dem Außendurchmesser der Schnappelemente 16 angepasst, wobei der Außendurchmesser so gewählt ist, dass dieser größer ist als der Außendurchmesser des Hülsenteils 1 im Endbereich, um an diesen hülsenartig gestalteten Grundkörper in axialer Richtung eine Verengerung in Form eines Bundes 20 vorsehen zu können. Das freie Ende dieses Bundes 20 ist wiederum hakenartig ausgebildet.

Das Steckteil 2, das in diesem Beispiel eine Druckleitung darstellt, ist in seinem Endbereich mit zwei Stauchungen 18 versehen, die als Anschläge fungieren. So fungiert die erste Stauchung 18a beim Einführen der Druckleitung 2 in das Hülsenteil 1 als Anschlag für das als O-Ring 4 ausgebildete Dichtelement. Beabstandet zur ersten Stauchung 18a ist eine zweite Stauchung 18b vorgesehen, die in axialer, von der Verbindung weg weisender Richtung mit ihrem Grund einen Hinterschnitt 19 bildet.

Im Gegensatz zu Figur 1 wird die Verbindung von Hülsenteil 1 und Druckleitung 2 realisiert, indem zunächst auf das Ende der Druckleitung 2 das Sicherungselement 8 aufgeschoben wird. Nach dem Einlegen des O-Rings 4 in das Hülsenteil 1 wird die Druckleitung 2 in das Hülsenteil 1 soweit eingeführt, bis der O-Ring 4 an die erste Stauchung 18a anschlägt. Danach schnappt zunächst das Hülsenteil 1 auf die Druckleitung 2 auf. Anschließend schnappen die Schnappelemente 16 hinter den Hinterschnitt 19 ein. Zuletzt rastet der hakenartige Bund 20 in die Griffrille 14 des Hülsenteils 1 ein. Durch diese konstruktive Ausbildung der Verbindungsstelle wird einerseits die Dichtheit an dieser gewährleistet, andererseits erhalten die Schnappelemente 16 entlang des Innendurchmessers des Sicherungselements 8 eine Führung und gleichzeitig einen Anschlag, wenn der Druck in der Leitung so hoch wird, dass dieser versucht, das Hülsenteil 1 axial wegzudrücken, wodurch die Schnappelemente 16 aufgrund ihrer Elastizität geneigt sind, ebenfalls radial auszuweichen. Dieses Ausweichen wird somit zusätzlich vom Sicherungselement 8 verhindert, was ebenfalls, wie in Figur 1, die Funktion hat, einer axialen Kraft entgegen zu wirken. Für eine Montage im Fahrzeug können somit bereits sowohl die Druckleitung 2 mit dem Sicherungselement 8 als auch das Hülsenteil 1 mit dem O-Ring 4 vormontiert und in einem weiteren Montageschritt nur durch das Aufschnappen des Sicherungselements 8 fertig verbunden werden. Dieser weitere bzw. endgültige Montageschritt erfordert wenig Kraftaufwand, keine zusätzlichen Werkzeuge und ist auch an schwer zugänglichen Stellen im Fahrzeugraum ausführbar.

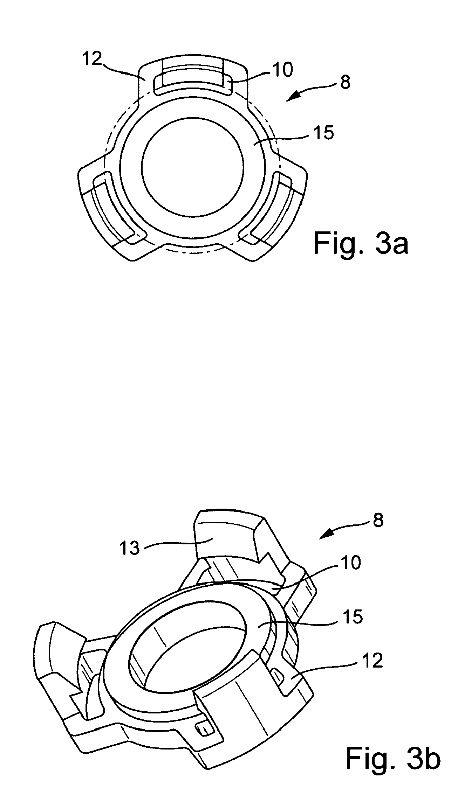

Die Figuren 3a und 3b zeigen einmal das erfindungsgemäße Sicherungselement 8 gemäß Figur 1 in der Vorderansicht (Fig. 3a) und in einer perspektivischen Darstellung (Fig. 3b). Auf eine Abbildung des erfindungsgemäßen Sicherungselements 8 gemäß Figur 2 wird verzichtet, da dessen wesentliche Funktionsmerkmale auch aus diesen Figuren 3a und 3b hervorgehen.

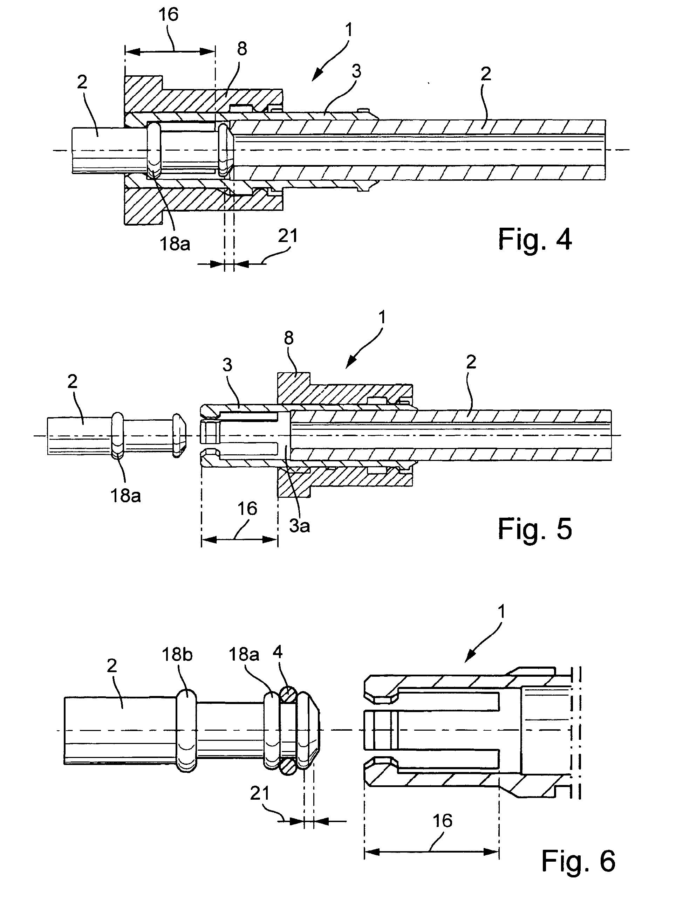

DieFigur 4 zeigt eine weitere Anwendungsmöglichkeit der Erfindung. In diesem Falle werden zwei Steckteile 2 miteinander verbunden. Bei dem linken Steckteil 2 handelt es sich um eine Druckleitung aus Stahl; das rechte Steckteil 2 verkörpert einen Kunststoffschlauch. Um, wie zuvor beschrieben, eine Steckverbindung zu realisieren, die aus einem Steckteil 2 und einem Hülsenteil 1 besteht, muss das Ende einer Leitung so konstruktiv verändert werden, dass es einem Hülsenteil 1 entspricht. Aus diesem Grunde wird vorzugsweise auf das Ende des Kunststoffschlauches 2 ein Adapter 3 aufgebracht, der ebenfalls aus Kunststoff besteht, so dass dieser mittels Reibschweißen auf den Kunststoffschlauch 2 aufgebracht und mit diesem unlösbar verbunden werden kann. Dieser Adapter 3 ist konstruktiv so ausgestaltet, dass er im Wesentlichen aus einem Grundkörper 3a besteht, an den sich eine axiale Verlängerung anschließt, die, wie aus Figur 2 bekannt, als mindestens ein an der Stirnseite angeordnetes Schnappelement 16 definiert ist; besser sind jedoch mehrere und über diese verteilte Schnappelemente 16, wie auch aus der Figur 4 ersichtlich ist. Diese Schnappelemente 16 sind wie in Figur 2 am Ende hakenartig ausgebildet, wobei die einzelnen Haken in Achsrichtung zeigen. Dieser Adapter 3 ist weiterhin so auf den Kunststoffschlauch 2 aufgebracht, dass der Bereich seines Grundkörper 3a infolge des Reibschweißens mit Kunststoffschlauch 2 unlösbar verbunden ist. Die Schnappelemente 16 ragen jedoch über das Ende des Kunststoffschlauch 2 hinaus. Durch diese konstruktive Maßnahme kann nunmehr der Endbereich des Kunststoffschlauches aus Hülsenteil 1 fungieren. Am Umfang des Grundkörpers 3a Adapters 3 sind weiterhin Erhebungen angebracht. Zur Realisierung der erfindungsgemäßen Steckverbindung ist auch in diesem Ausführungsbeispiel ein Sicherungselement 8 erforderlich, das auf das Hülsenteil 1 aufgesteckt wird. Um mit den entsprechenden Erhebungen des Grundkörpers 3a des Adapters eine Wirkverbindung in Form einer bajonettartigen Verbindung eingehen zu können, sind am Innendurchmesser Sicherungselements 8 entsprechende Vertiefungen vorgesehen. Dabei ist mindestens eine dieser Erhebungen auf dem in Richtung Leitung weisenden Ende des Grundkörpers 3a des Adapters 3 als Anschlag für eine axiale Bewegung des Sicherungselements 8 ausgebildet. Befindet sich das Sicherungselement 8 an diesem Anschlag, befindet es sich in seiner Ausgangsstellung. Beabstandet zu diesem Anschlag ist mindestens eine weitere Erhebung auf dem Grundkörper 3a des Adapters 3 vorgesehen, die in Verbindung mit der entsprechend vorgesehenen Vertiefung im Innendurchmesser des Sicherungselements 8 einen Endanschlag für dieses definiert.

In Figur 4 ist die erfindungsgemäße Steckverbindung bereits realisiert, wobei sich das Sicherungselement 8 in seiner Endstellung befindet. Aus dieser Figur ist weiterhin erkennbar, dass die nunmehr als Steckteil fungierende Druckleitung 2 in ihrem Endbereich mit einer Stauchung 18a versehen ist. Diese ist vom konisch ausgebildeten Endbereich 21 beabstandet.

Aus der Figur 4 geht ebenfalls hervor, wie die Schnapphaken 16 hinter dieser Stauchung 18a einschnappen. Zur Erreichung einer Abdichtung ist das Ende der Druckleitung 2 konisch ausgebildet, wobei der Konus an seinem größten Durchmesser zur Erzielung einer größtmöglichen Kontaktfläche mit dem umgebenden Hülsenteil 1 in eine ballige Form übergeht. Das die Schnappelemente 16 umhüllende Sicherungselement 8 dient wiederum dazu, axialen Kräften, die ein radiales Auseinanderspreizen der Schnappelemente 16 zur Folge hätten, entgegen zu wirken.

Die Figur 5 zeigt die Leitungsenden gemäß Figur 4 vor der Realisierung der Steckverbindung. In diesem Zustand befindet sich das Sicherungselement 8 in seiner Ausgangsstellung, das heißt, die Schnappelemente 16 des Adapters 3 sind nicht von diesem umhüllt. Das Sicherungselement 8 kann axial dadurch verlagert werden, indem einer Längsbewegung eine Drehbewegung überlagert wird, wobei die Drehbewegung dazu dient, zunächst eine eingerastete Ausgangsstellung zu überwinden und nach Erreichung des Endanschlages mit einer anschließenden Drehbewegung das Sicherungselement 8 in der Endstellung zu fixieren. Diese Vorgehensweise ist analog der bei der Realisierung eines Bajonettverschlusses. Auf diese Weise kann das Sicherungselement 8 von seiner Ausgangsstellung in seine Endstellung oder umgekehrt gebracht werden. Befindet sich das Sicherungselement 8 verliersicher in seiner Ausgangsstellung, kann die Druckleitung 2 mit ihrem konisch ausgebildeten Endbereich 21 zwischen die hakenartig ausgebildeten Enden der Schnappelemente 16 eingedrückt werden, so weit, bis diese hinter die Stauchung 18a einschnappen. Die Stauchung 18a ist dabei so weit vom Endbereich 21 entfernt gewählt, dass dieser bei diesem Vorgang an der Stirnseite des gebildeten Hülsenteils 1 anschlägt, wodurch eine Abdichtung erzielt wird. Anschließend wird mittels der beschriebenen Dreh-Längsbewegung das Sicherungselement 8 axial so weit verschoben, bis es seine Endstellung erreicht hat. Diese Endstellung wird in diesem Fall dadurch charakterisiert, dass die Stirnseite des Sicherungselementes 8 mit der Stirnseite der hakenartig ausgebildeten Enden der Schnappelemente 16 miteinander fluchten. Dies ist allerdings keine Bedingung. Ebenso gut könnte das Sicherungselement 8 in seiner Länge über die Schnappelemente 16 hinausragen oder aber auch vor deren Stirnseite enden.

Aus der Figur 6 wird eine weitere Möglichkeit der Anwendung der erfindungsgemäßen Steckverbindung aufgezeigt. Hierbei handelt es sich um ein als Druckleitung 2 ausgebildetes Steckteil, das in ein Hülsenteil 1 eines Bauteils, das beispielsweise ein Adapters, eine Dämpfungseinrichtung usw. sein kann, eingedrückt wird. Bei diesem Ausführungsbeispiel ist der Endbereich des Hülsenteils 1 wie bereits in den Figuren 2, 4 und 5 beschrieben, als mehrere über den Umfang verteilt angeordnete Schnappelemente 16 ausgebildet, die wiederum jeweils hakenartig ausgebildete Enden aufweisen, die in Achsrichtung zeigen. Die Druckleitung 2 ist bei diesem Ausführungsbeispiel mit zwei voneinander beabstandeten Stauchungen 18a und 18b versehen. Weiterhin ist zwischen dem konischen Endbereich 21 und der ersten Stauchung 18a ein Abstand vorgesehen, der von einem Dichtelement 4, wie beispielsweise einem O-Ring, ausgefüllt wird. Die so vorbereitete Druckleitung 2 wird ebenso, wie bereits in Figur 5 beschrieben, in den Endbereich des Hülsenteils 1 so weit eingesteckt, bis dessen Schnappelemente 16 hinter die zweite Stauchung 18b der Druckleitung 2 einschnappen. Nachfolgend wird das in dieser Figur nicht dargestellte Sicherungselement 8 in seine Endstellung gebracht.

### Bezugszeichenliste

- 1: Hülsenteil
- 2: Steckteil / Bauteilanschluss / Druckleitung / Kunststoffschlauch
- 3: Adapter
- 4: Dichtelement / O-Ring
- 5:
- 6:
- 7: Hinterschnitt
- 8: Sicherungselement
- 9: zylindrische Erweiterung
- 10: Aussparung
- 11: axiale Verlängerung
- 12: Lasche
- 13: Rastelement
- 14: Griffrille
- 15: Grundkörper
- 16: Schnappelemente
- 17: axiale Verlängerung
- 18a: erste Stauchung
- 18b: zweite Stauchung
- 19: Hinterschnitt
- 20: Bund
- 21: Endbereich
- 22: Anschlussbereich
- 23: hülsenförmiger Grundkörper
- 24: Ringnut
- 25: Abstand Stauchungen
- 26: Abstand

## Patentansprüche

1. Steckverbindung für Leitungen, insbesondere Leitungen für Kupplungsausrück- und Bremssysteme in Fahrzeugen mit einem Steckteil (2), einem Hülsenteil (1), einem Sicherungselement (8) und mindestens einem Dichtelement (4), **dadurch gekennzeichnet, dass** das zur Aufnahme mindestens einer Axialkraft dienende Sicherungselement (8) auf dem als Hülsenteil (1) ausgebildeten Endbereich einer Leitung oder eines Bauteils axial und radial lagefixierbar ist.

2. Steckverbindung nach Anspruch 1, **dadurch gekennzeichnet, dass** das Hülsenteil (1) an mindestens einem Ende eine axiale Verlängerung (11) aufweist.

3. Steckverbindung nach Anspruch 1 und 2, **dadurch gekennzeichnet, dass** mindestens an einem Ende des Hülsenteils (1) an der axialen Verlängerung (11) in deren Verlängerung sich mindestens ein Schnappelement (16) anschließt, durch das eine zusätzliche axiale Verlängerung (17) gebildet wird.

4. Steckverbindung nach Anspruch 3, **dadurch gekennzeichnet, dass** sich in der Verlängerung zur axialen Verlängerung (11) mehrere Schnappelemente (16) anschließen, die zueinander beabstandet auf einer Kreisbahn angeordnet sind.

5. Steckverbindung nach Anspruch 3 und 4, **dadurch gekennzeichnet, dass** das Ende eines bzw. mehrerer Schnappelemente (16) hakenartig ausgebildet ist.

6. Steckverbindung nach Anspruch 5, **dadurch gekennzeichnet, dass** dieser bzw. diese Haken in Achsrichtung zeigen.

7. Steckverbindung nach Anspruch 2, **dadurch gekennzeichnet, dass** der Innendurchmesser der axialen Verlängerung (11) eine zylindrische Erweiterung (9) aufweist.

8. Steckverbindung nach Anspruch 4, **dadurch gekennzeichnet, dass** sich die Tiefe dieser zylindrischen Erweiterung (9) mindestens nach der möglichen axialen Ausdehnung des verwendeten Dichtelements (4) bestimmt.

9. Steckverbindung nach Anspruch 2, **dadurch gekennzeichnet, dass** am Umfang der axialen Verlängerung (11) mindestens eine Griffrille (14) vorgesehen ist.

10. Steckverbindung nach Anspruch 1, **dadurch gekennzeichnet, dass** sich das Ende des Steckteils (2) aus einem Endbereich (21) und einem Anschlussbereich (22) zusammensetzt und am Übergang von einem zum anderen Bereich ein Absatz bzw. Hinterschnitt (7) gebildet wird.

11. Steckverbindung nach Anspruch 1, **dadurch gekennzeichnet, dass** das Sicherungselement (8) ringförmig ausgebildet ist.

12. Steckverbindung nach Anspruch 1 und 8, **dadurch gekennzeichnet, dass** am Umfang des ringförmigen Grundkörpers des Sicherungselements (8) in radialer Richtung mindestens eine Lasche (12) angebracht ist.

13. Steckverbindung nach Anspruch 9, **dadurch gekennzeichnet, dass** am Umfang des ringförmigen Grundkörpers (15) des Sicherungselements (8) und über dessen Umfang verteilt in radialer Richtung mehrere Laschen (12) angebracht sind.

14. Steckverbindung nach den Ansprüchen 1, 12 und 13, **dadurch gekennzeichnet, dass** am Umfang des Sicherungselements (8) drei Laschen (12) in einem Winkel von 120° zueinander angeordnet sind.

15. Steckverbindung nach Anspruch 1 und 8, **dadurch gekennzeichnet, dass** mindestens eine Lasche (12) des Sicherungselements (8) in axialer Richtung mindestens einen Bund (20) aufweist, der durch sein hakenartig ausgebildetes Ende ein Rastelement (13) definiert.

16. Steckverbindung nach Anspruch 15, **dadurch gekennzeichnet, dass** die hakenartige Form in Achsrichtung weist.

17. Steckverbindung nach Anspruch 12, **dadurch gekennzeichnet, dass** die mindestens eine Lasche (12) eine Aussparung (10) aufweist.

18. Steckverbindung nach Anspruch 1, **dadurch gekennzeichnet, dass** das Sicherungselement (8) einen hülsenförmigen Grundkörper (23) aufweist.

19. Steckverbindung nach Anspruch 18, **dadurch gekennzeichnet, dass** im Innern in mindestens einem Endbereich des Grundkörpers (23) eine Ringnut (24) eingebracht ist.

20. Steckverbindung nach Anspruch 18 und 19, **dadurch gekennzeichnet, dass** durch die Ringnut (24) ein als Rastelement (13) fungierender Bund (20) definiert wird.

21. Steckverbindung nach Anspruch 20, **dadurch gekennzeichnet, dass** dieses Rastelement (13) endseitig hakenartig ausgebildet ist, wobei die hakenartige Form in Achsrichtung zeigt.

22. Steckverbindung nach Anspruch 1, **dadurch gekennzeichnet, dass** in den Endbereich des Steckteils (2) eine erste Stauchung (18a) und eine zweite Stauchung (18b) eingebracht ist, die einen Abstand (25) voneinander haben.

23. Steckverbindung nach den Ansprüchen 5, 6, 20 und 22, **dadurch gekennzeichnet, dass** die Abstände (25) und die Abstände (26) in einer Beziehung zueinander stehen.

24. Steckverbindung nach Anspruch 1, **dadurch gekennzeichnet, dass** im eingebauten Zustand das Dichtelement (4) einen Anschlag zwischen der Leitung (2) und dem Hülsenteil (1) erfährt.

25. Steckverbindung nach Anspruch 1, **dadurch gekennzeichnet, dass** im eingebauten Zustand das Dichtelement (4) einen Anschlag zwischen dem Hülsenteil (1) und dem Sicherungselement (8) erfährt.

26. Steckverbindung nach Anspruch 1, **dadurch gekennzeichnet, dass** das Sicherungselement (8) aus einem elastischen Material besteht.

27. Steckverbindung nach Anspruch 1, **dadurch gekennzeichnet, dass** mindestens eines der beiden Teile, das Hülsenteil (1) oder das Steckteil (2), aus einem elastischen Material hergestellt sind.

28. Steckverbindung nach Anspruch 1 und 27, **dadurch gekennzeichnet, dass** mindestens eines der beiden Teile, das Hülsenteil (1) oder das Steckteil (2), aus Kunststoff hergestellt sind.

29. Steckverbindung nach Anspruch 1, **dadurch gekennzeichnet, dass** zur Bildung eines Hülsenteils (1) ein Adapter (3) auf einem Leitungsende aufgebracht ist.

30. Steckverbindung nach Anspruch 1 und 29, **dadurch gekennzeichnet, dass** der Adapter (3) kraft- bzw. formschlüssig auf einen Endbereich einer Leitung aufgebracht ist.

31. Steckverbindung nach Anspruch 1 und 29, **dadurch gekennzeichnet, dass** der Adapter (3) aus Kunststoff hergestellt ist.

32. Steckverbindung nach den Ansprüchen 29 und 31, **dadurch gekennzeichnet, dass** der Adapter (3) mittels Reibschweißen auf einen Endbereich mindestens einer Leitung aufgebracht ist.

33. Steckverbindung nach Anspruch 29, **dadurch gekennzeichnet, dass** der Adapter (3) an seinem Umfang mindestens zwei Halteelemente aufweist, die in axialer Richtung voneinander beabstandet sind und für das Sicherungselement (8) einen Anschlag in dessen jeweils einer Endposition bilden.

34. Steckverbindung nach Anspruch 1 und den Ansprüchen 3 bis 6, **dadurch gekennzeichnet, dass** der Adapter (3) aus einem Grundkörper (3a) mit sich in axialer Verlängerung daran anschließenden Schnappelementen (16) gebildet wird.

35. Steckverbindung nach Anspruch 1, **dadurch gekennzeichnet, dass** das Sicherungselement (8) am Innenumfang mindestens eine Vertiefung aufweist, die mit mindestens einer entsprechend ausgebildeten Erhebung am Umfang des Adapters (3) so korrespondiert, dass über eine Dreh- Längsbewegung eine axiale Bewegung des Sicherungselements (8) realisiert wird.

36. Verfahren zur Realisierung einer Steckverbindung nach Anspruch 1, **gekennzeichnet durch** folgende Schritte:
- Einlegen des Dichtelements (4) in die zylindrische Erweiterung (9) des Hülsenteils (1),
- Aufsetzen des Sicherungselements (8) auf die axialen Verlängerungen (11) des Hülsenteils (1) soweit, bis die Rastelemente (13) in die Griffrille (12) einrasten,
- Eindrücken des Steckteils (2) in das Hülsenteil (1) soweit, bis dessen Stirnfläche an der inneren ringförmigen Stirnfläche des Hülsenteils (1) anschlägt und das Dichtelement (4) in den Hinterschnitt (7) des Steckteils (2) einrastet,

37. Verfahren zur Realisierung einer Steckverbindung nach Anspruch 1, **gekennzeichnet durch** folgende Schritte:
- Einlegen des Dichtelements (4) in die zylindrische Erweiterung (9) des Hülsenteils (1),
- Aufsetzen des Sicherungselements (8) auf das Steckteil (2),
- Eindrücken des Steckteils (2) in das Hülsenteil (1) soweit bis die Stirnfläche der ersten Stauchung (18a) an dem Dichtelement (4) anschlägt,
- Einschnappen der Schnappelemente (16) hinter die Stirnfläche der zweiten Stauchung (18b),
- Einrasten des mindestens einen Rastelements (13) des Sicherungselements (8) in die Griffrille (14) des Hülsenteils (1).

38. Verfahren zur Realisierung einer Steckverbindung nach Anspruch 1, **gekennzeichnet durch** folgende Schritte:
- Aufsetzen des Sicherungselements (8) auf das Hülsenteil (1) soweit, bis es auf diesem seine Ausgangsstellung erreicht hat, wobei es mittels einer Drehbewegung gleichzeitig lagefixiert wird,
- Eindrücken des Steckteils (2) in das Hülsenteil (1) bis das Steckteil (2) an einem Hindernis in dessen Innerem anschlägt,
- Einschnappen der Schnappelemente (16) hinter die Stirnfläche einer Stauchung (18a, 18b),
- axiale Verlagerung des Sicherungselements (8) auf dem Hülsenteil (1) in Richtung Schnappelemente (16), bis das Sicherungselement (8) seine Endstellung auf dem Hülsenteil (1)erreicht hat,
- mit einer Drehbewegung wird das Sicherungselement (8) in dieser Endstellung lagefixiert.
